# EUROPEAN PATENT APPLICATION

(11) **EP 4 752 480 A1**
(43) Date of publication of application: **03.06.2026**
(21) Application number: 24849573.1
(22) Date of filing: 30.07.2024
(51) Int. Cl.: F25D 23/06, F16L 59/065

(54) **HEAT INSULATOR**

(30) Priority: 31.07.2023 KR 20230100016
(71) Applicant: LG Electronics Inc., Yeongdeungpo-gu Seoul 07336 (KR)
(72) Inventor: JUNG, Wonyeong, Seoul 08592 (KR); YOUN, Deokhyun, Seoul 08592 (KR); KIM, Bongjin, Seoul 08592 (KR)
(74) Representative: Ter Meer Steinmeister & Partner
(86) International application number: PCT/KR2024/011148
(87) International publication number: WO 2025/029006

(57) **Abstract**

The present disclosure provides a heat insulator including a first plate, a second plate, and a vacuum space portion provided between the first plate and the second plate, wherein the heat insulator includes a connecting member having at least one connecting area that enables the heat insulator to be connected, the connecting member including a plurality of members that are connected to be arranged in at least two directions intersecting each other, and a block provided on at least one side of the connecting area.

## Description

### [Technical Field]

The present disclosure relates to a heat insulator.

### [Background Art]

First, there is Korean Patent No. 10-0343719 (Patent Document 1) of the present application. According to the Patent, a vacuum adiabatic panel is manufactured, the vacuum adiabatic panel is embedded in the wall of a refrigerator, and the exterior of the vacuum adiabatic panel is finished with a separate molded Styrofoam material. This method eliminates the need for foaming and improves insulation performance. However, this method has the drawback of increasing costs and complicating the manufacturing process.

As another example, there have been attempts to fabricate the entire refrigerator wall as a single vacuum heat insulator. For example, U.S. Patent Publication No. US2040226956A1 (Patent Document 2) discloses a method for providing an insulating structure for a refrigerator in a vacuum state. However, it is difficult to provide a sufficient vacuum in the walls of a refrigerator to achieve a practical level of insulation. Specifically, there are several problems, including the difficulty in preventing heat transfer at the contact portion between the outer and inner cases, which have different temperatures, the difficulty in maintaining a stable vacuum state, and the difficulty in preventing deformation of the case due to negative vacuum pressure.

Japanese Patent Application Laid-Open No. 2011-247534 (Patent Document 3) discloses an insulation box that simplifies the bonding work and improves productivity when installing and preparing multiple vacuum adiabatic panels.

Patent Document 3 discloses an insulation box of a refrigerator including an inner case and an outer case and a plurality of vacuum adiabatic panels provided between the inner and outer cases, and forming a plurality of wall portions of a refrigerator main body, wherein the inner case is formed by combining a plurality of inner case partitions into which the entire inner case is divided, and a plurality of vacuum adiabatic panels are formed in a shape corresponding to each inner case segment, and each of the vacuum adiabatic panels and each of the inner case partitions is installed in the insulation box.

Conventional heat insulators have problems with deformation due to vacuum pressure and deformation caused by internal refrigerator shelves and loads.

Conventional heat insulators have problems with structural strength and insulation performance at corner portions or where a plurality of heat insulators are connected.

### [Prior Art Document]

### [Patent Document]

Korean Patent No. 10-0343719
U.S. Patent Publication No. US20040226956A1
Japanese Patent Application Laid-Open No. 2011-247534A

### [Disclosure]

### [Technical Problem]

The present disclosure provides a technology for a heat insulator.

Optionally or additionally, the present disclosure provides a technology for improving the strength of a heat insulator or improving the strength at a portion where a plurality of heat insulators are connected.

Optionally or additionally, the present disclosure provides a technology for improving the insulating performance of a heat insulator or improving the insulating performance at a portion where a plurality of heat insulators are connected.

Optionally or additionally, the present disclosure provides a technology for reducing vacuum leakage of a heat insulator or reducing vacuum leakage at a portion where a plurality of heat insulators are connected.

Other tasks of the present disclosure can also be described in [Detail Description of the Disclosure].

### [Technical Solution]

A heat insulator of the present disclosure may include a first plate and/or a second plate. The heat insulator may include a vacuum space portion provided between the first plate and the second plate. The heat insulator may include a connecting member. The connecting member includes a plurality of members that are connected to be arranged in at least two directions intersecting each other. The connecting member may have at least one connecting area that enables the heat insulator to be connected. The heat insulator may include a block provided on at least one side of the connecting area.

The block may include a non-vacuum insulating portion connected to one side of the heat insulator and/or an insulating cover supported by an inner surface of the heat insulator to shield the non-vacuum insulating portion.

At least two heat insulators arranged in directions intersecting each other may be provided. The non-vacuum insulating portion may be arranged to insulate one side of the heat insulators adjacent to each other.

At least two heat insulators arranged in directions intersecting each other may be provided. The insulating cover may be supported by one surface of each of the heat insulators adjacent to each other.

Both side portions of the insulating cover may be supported by one surface of each of the heat insulators adjacent to each other.

The heat insulator may include a reinforcement portion. The reinforcement portion may be coupled to an inner surface of the first plate. The reinforcement portion may have at least one side protruding and supported by one side of the insulating cover.

The reinforcement portion may be supported so as to face both side portions of the insulating cover.

At least one portion of the insulating cover may be formed to be bent.

The heat insulator may include a reinforcing plate. The reinforcing plate may be connected to one surface of the first plate. At least one side of the reinforcing plate may be bent so that the reinforcing plate is supported by one side of the insulating cover.

The reinforcement portion may be formed along an edge of the reinforcing plate.

The reinforcement portion may support one side of a component provided on one surface of the first plate.

The connecting member may be implemented in a form in which a plurality of members extending in three intersecting directions are connected.

The connecting member may include a first member and/or a second member. The first member may extend in a first direction. The second member may extend in a second direction intersecting the first direction. The second member may be coupled to the first member. The connecting member may include a third member. The third member may extend in a third direction intersecting the first direction and/or the second direction. The third member may be coupled to at least one of the first member and the second member.

At least one of the first to third members may have a portion that is bent on at least one side so as to support a portion of a component provided on the first plate.

The heat insulator may include a reinforcing plate. The reinforcing plate may be connected to one surface of the first plate. The reinforcing plate may have a reinforcement portion that is bent on at least one side and supported by one side of the insulating cover. The reinforcement portion may overlap a portion where at least one side is bent to support a portion of the component.

### [Advantageous Effects]

The heat insulator of the present disclosure can provide a structure that stably supports the heat insulator. The heat insulator of the present disclosure can provide a structure capable of connecting the heat insulator.

The heat insulator of the present disclosure can provide a structure capable of reinforcing strength between the first heat insulator and the second insulator.

The heat insulator of the present disclosure can provide a structure that improves insulation performance between the first heat insulator and the second heat insulator.

### [Description of Drawings]

FIG. 1 is a perspective view illustrating the exterior of a refrigerator according to one embodiment of the present disclosure.
FIG. 2 is a conceptual diagram illustrating a heat insulator provided in the refrigerator of FIG. 1.
FIG. 3 is a conceptual diagram illustrating a third plate provided on a plate of FIG. 2.
FIG. 4 is a conceptual diagram illustrating a thermal insulator provided on the plate of FIG. 3.
FIG. 5 is a perspective view illustrating an example in which a plurality of heat insulators are connected to a connecting member.
FIG. 6 is a front view of FIG. 5 viewed in the -x direction.
FIG. 7 is an enlarged view of portion A of FIG. 6.
FIG. 8 is an enlarged view of portion B of FIG. 6.
FIG. 9 is an enlarged view of portion C of FIG. 6.
FIG. 10 is a side view of FIG. 5 viewed in the -y direction.
FIG. 11 is an enlarged view of portion D of FIG. 10.
FIG. 12 is an enlarged view of portion E of FIG. 10.
FIG. 13 is an enlarged view of portion F of FIG. 10.
FIG. 14 is a plan view of FIG. 5 viewed in the -z direction.

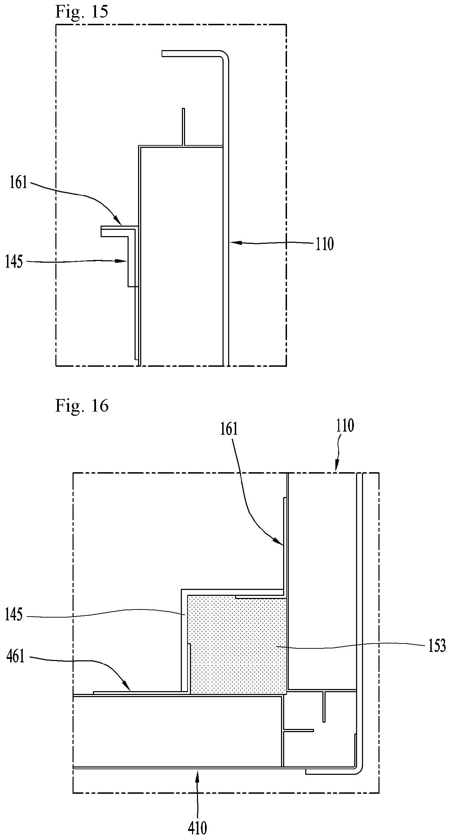

FIG. 15 is an enlarged view of portion G of FIG. 14.
FIG. 16 is an enlarged view of portion H of FIG. 14.
FIG. 17 is a perspective view illustrating a connecting member of the present disclosure.
FIG. 18 is a front view of FIG. 17 viewed in the -x direction.
FIG. 19 is a side view of FIG. 17 viewed in the -y direction.
FIG. 20 is a conceptual diagram illustrating the heat insulator of the present disclosure.
FIG. 21 is a perspective view of the heat insulator of the present disclosure viewed from one side.
FIG. 22 is a side view illustrating the heat insulator of the present disclosure.
FIG. 23 is a cross-sectional view taken along line A-A' in FIG. 20.

### [Mode for Invention]

From now on, a common description describing the parts commonly defined in all embodiments of the present disclosure will be described.

Optionally, the heat insulator of the present disclosure may be provided as a single heat insulator. For example, the heat insulator may provide a first wall extending in one direction and a second wall extending in a direction different from the one direction. Optionally, the heat insulator of the present disclosure may include a first heat insulator and a second heat insulator. The second heat insulator may be provided as a separate component separated from the first heat insulator. The second heat insulator may be connected to the first heat insulator by a connecting member. In the present disclosure, the connecting member may be defined as a joint. The second heat insulator may include a portion extending in the same direction as the first heat insulator. The second heat insulator may include a portion extending in a different direction from the first heat insulator. The second heat insulator may include a portion connected to the first heat insulator, or may include a portion arranged to overlap the first heat insulator in at least one direction. The heat insulator may be a vacuum heat insulator including a vacuum space portion or a non-vacuum heat insulator not including a vacuum space portion. The heat insulator may be a combination of the vacuum heat insulator and the non-vacuum heat insulator. The vacuum space portion provided in the second heat insulator may include a portion extending in the same direction as the vacuum space portion provided in the first heat insulator. The vacuum space portion provided in the second heat insulator may include a portion extending in a different direction from the vacuum space portion provided in the first heat insulator. The vacuum space portion provided in the second heat insulator may include a portion arranged to overlap the vacuum space portion provided in the first heat insulator in at least one direction. The heat insulator may be provided in the form of a panel. In the present disclosure, a "panel" is described below as an example, but a disclosure in which the "panel" is replaced with the "heat insulator" may also be included in the present disclosure. For example, in the present disclosure, when it is described below that at least two panels of the main body form the exterior of the refrigerator, it may be understood or interpreted that at least two heat insulators of the main body form the exterior of the refrigerator.

Optionally, the refrigerator of the present disclosure may include a main body. The main body may include at least one storage chamber. The main body may include a partition wall dividing a first storage chamber and a second storage chamber. The first storage chamber joint may include a first first storage chamber joint, a second first storage chamber joint, and/or a third first storage chamber joint. The second storage chamber joint may be provided on one side of the second storage chamber. The second storage chamber joint may include a first joint, a second joint, and/or a third joint.

The partition wall may include the vacuum heat insulator and/or the non-vacuum heat insulator. The refrigerator of the present disclosure may include a door. The refrigerator of the present disclosure may include a machine room disposed on one side of the main body. At least one of a compressor, a heat-radiating component (for example, a condenser, a heat-radiating portion of a thermoelectric module, a heat sink for heat exchange with the heat-radiating portion of a thermoelectric module, or the like), and a cooling fan may be disposed in the machine room. The refrigerator may include at least one of a first cover (for example, a side cover) forming at least a portion of a first surface (for example, a side surface), a second cover (for example, a back cover) forming at least a portion of a second surface (for example, a rear surface), a third cover (for example, an upper cover) forming at least a portion of a third surface (for example, an upper surface), a fourth cover (for example, a bottom cover) forming at least a portion of a fourth surface (for example, a bottom surface), and a fifth cover (for example, a front cover) forming at least a portion of a fifth surface (for example, a front surface) for the machine room. One or more of the first, second, third, fourth, and fifth covers may be provided as a single component or in a plurality of components. The machine room may include the heat insulator in the refrigerator of the present disclosure.

The panel may include at least one of a first plate, a second plate, and a side plate. A vacuum space portion may be provided between the first plate and the second plate. The refrigerator of the present disclosure may include at least one panel. The present disclosure may include at least one of a first panel forming at least a portion of a first surface (for example, a side surface) of the refrigerator, a second panel forming at least a portion of a second surface (for example, a rear surface) of the refrigerator, a third panel forming at least a portion of a third surface (for example, an upper surface) of the refrigerator, a fourth panel forming at least a portion of a fourth surface (for example, a bottom surface) of the refrigerator, and a fifth panel forming at least a portion of a fifth surface (for example, a front surface) of the refrigerator. At least one of the first, second, third, fourth, and fifth surfaces of the refrigerator may provide at least a portion of a wall forming the main body or may provide at least a portion of a wall forming the door. At least one of the first, second, third, fourth, and fifth panels may be provided as a single component or may be provided in a plurality of components. The joint may be provided to connect the corner of the refrigerator or to connect a first wall and a second wall forming a wall of the refrigerator to each other. The joint may be provided to connect the panel to another component (for example, another panel). The joint may be provided to connect at least two of the first, second, third, fourth, and fifth panels. At least one of the first, second, third, fourth, and fifth panels may be provided as a plurality of panels, and the joint may be provided to connect the plurality of panels to each other. The joint may include a first surface, a second surface, and/or a third surface. The first surface of the joint may cover at least a portion of at least one of the first, second, third, fourth, and fifth panels. The second surface of the joint may cover at least a portion of at least another one of the first, second, third, fourth, and fifth panels. The third surface of the joint may be connected to the first surface of the joint and/or the second surface of the joint. The third surface of the joint may be connected to a corner of the first surface of the joint and/or a corner of the second surface of the joint. The third surface of the joint may be formed to be inclined to at least one of the first surface of the joint and the second surface of the joint. At least some of the first, second, third, fourth, and fifth panels may be provided as panels having a first insulation performance per unit thickness, and at least other some of the first, second, third, fourth, and fifth panels may be provided as panels having a second insulation performance per unit thickness. The first insulation performance and the second insulation performance may be different.

The heat insulator or refrigerator of the present disclosure may include a duct. The duct may include a first duct, a second duct, and/or a third duct. The first duct may supply cold air to the first storage chamber or the second storage chamber. The second duct may accommodate an evaporator. The third duct may be connected to the first duct and the second duct in communication with each other. The third duct may include a first surface, a second surface, a third surface, a fourth surface, and/or a fifth surface. The first surface of the third duct may surround the first surface of the joint. The second surface of the third duct may surround the second surface of the joint. The third surface of the third duct may surround the third surface of the joint. The third duct may include a fourth surface. The fourth surface of the third duct may extend from the first surface of the third duct or may be arranged toward the second storage chamber. The fifth surface of the third duct may extend from the second surface of the third duct or may be arranged toward the evaporator.

The heat insulator or refrigerator of the present disclosure may include a block. The block may include a portion extending in the same direction as one or more of the first, second, third, fourth, and fifth panels. The block may include a portion extending in a different direction from one or more of the first, second, third, fourth, and fifth panels. The block may include a first surface (for example, a left surface), a second surface (for example, a right surface), a third surface (for example, a rear surface), a fourth surface (for example, a lower surface), a fifth surface (for example, an upper surface), and a sixth surface (for example, a front surface). Some of the first, second, third, fourth, and fifth surface of the refrigerator may be provided in the form of panels, and other parts of the first, second, third, fourth, and fifth surfaces of the refrigerator may be provided in the form of blocks. The block may be provided as the non-vacuum heat insulator. For example, the block may be a block cover and/or a PU foam filling inside the block cover. The block may include at least one of a first block portion (for example, a side block portion), a second block portion (for example, a rear block portion or a front block portion), and a third block portion (for example, a bottom block portion or an upper block portion). Each of the first, second, and third block portions may be provided in a plurality of block portions. At least two of the first, second, and third block portions may be connected to provide the joint. The third block portion may form one surface of the first storage chamber and/or one surface of the machine room. The third block portion may be provided as a partition wall, or may form one surface of the first storage chamber.

The heat insulator or refrigerator of the present disclosure may include an insulating reinforcement portion. The insulating reinforcement portion may include a portion connected to one side of the block, or a portion formed to protrude from the block.

The heat insulator or refrigerator of the present disclosure may include a hinge. The hinge may be arranged on one side of the heat insulator. The hinge may be arranged on the main body and/or door of the refrigerator.

The hinge may include at least one of a hinge fixing portion which is a portion that the hinge is coupled to at least one of the heat insulator, the main body of the refrigerator, and the door of the refrigerator, a hinge shaft, and a hinge connecting portion which is a portion extending to protrude from the hinge fixing portion. The hinge may include at least one of a first hinge (for example, an upper hinge) arranged on one side of a wall forming the first storage chamber, a second hinge (for example, a middle hinge) arranged on the partition wall, and a third hinge (for example, a lower hinge) of the wall forming the second storage chamber. The heat insulator or the refrigerator of the present disclosure may include at least one of a hinge reinforcing frame that reinforces the strength of the hinge, a cover to which the hinge is coupled, and a hinge reinforcing plate that is arranged or accommodated so as to be connected to the panel. The hinge reinforcing frame may include at least one of a first, a second, a third, and a fourth frame portion. At least two of the first, second, third, and fourth frame portions may extend in different directions.

The heat insulator or refrigerator of the present disclosure may include a support frame. The support frame may support one surface of the panel. The support frame may include a coupling portion. The block may be supported by the support frame in the machine room. The support frame may include a first support frame and/or a second support frame.

The heat insulator or refrigerator of the present disclosure may include an inner cover. The inner cover may be arranged between the cover of the machine room and the hinge reinforcement frame (for example, the first frame portion).

The heat insulator or refrigerator of the present disclosure may include a decoration. The decoration may be arranged on the surface of the heat insulator. The decoration may be arranged on the surface of the main body and/or door of the refrigerator. For example, the decoration may be arranged on the outer surface of the heat insulator or the outer surface of the refrigerator.

The heat insulator or refrigerator of the present disclosure may include a hot line. The hot line may be arranged on the surface of the heat insulator. The decoration may be arranged on the surface of the main body and/or door of the refrigerator. The hot line may be arranged between the decoration and the surface of the heat insulator. The hot line may be arranged between the decoration and the surface of the refrigerator and/or between the decoration and the surface of the door.

The heat insulator or refrigerator of the present disclosure may include a casing. The casing may be an outer casing or an inner casing. The outer casing may be connected to the second plate. The outer casing may be provided to cover at least a portion of the second plate. The outer casing may be provided in contact with the second plate or spaced apart from the second plate by a predetermined distance. The inner casing may be connected to the first plate. The inner casing may be provided to cover at least a portion of the first plate. The inner casing may be provided in contact with the first plate or spaced apart from the first plate by a predetermined distance.

The heat insulator or refrigerator of the present disclosure may include a drawer and/or a drawer guide. The drawer guide may include a first storage chamber drawer guide provided in a first storage chamber. The first storage chamber drawer guide may include at least one of a first plate (for example, a side plate), a second plate (for example, a bottom plate), a third plate (for example, a top plate), and a fourth plate (for example, a middle plate).

The drawer guide may be provided with a second storage chamber drawer guide provided in the second storage chamber.

The heat insulator or refrigerator of the present disclosure may include a shelf and/or a shelf support frame.

[Details Description of the Disclosure] is divided into the aforementioned [common description] and the [description based on drawings] described below. In the [Details Description of the Disclosure], each of the specific details described for carrying out the disclosure may be understood as an embodiment of the present disclosure. In the [Details Description of the Disclosure], a content that combines at least two or more of the specific details described for carrying out the disclosure may also be understood as an embodiment of the present disclosure. For example, each paragraph and each combination of paragraphs in the [common description] section or the section described based on the drawings in the [Details Description of the Disclosure] may be understood as an embodiment of the present disclosure. As another example, each sentence and each combination of sentences in the [Common description] section or the section described based on the drawings in the [Details Description of the Disclosure] may be understood as an embodiment of the present disclosure.

From now on, based on each drawing, the [description based on drawing] section describing the present disclosure will be described.

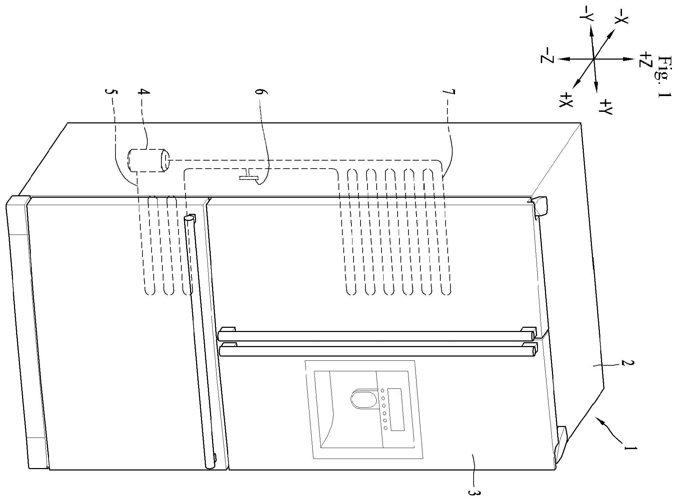

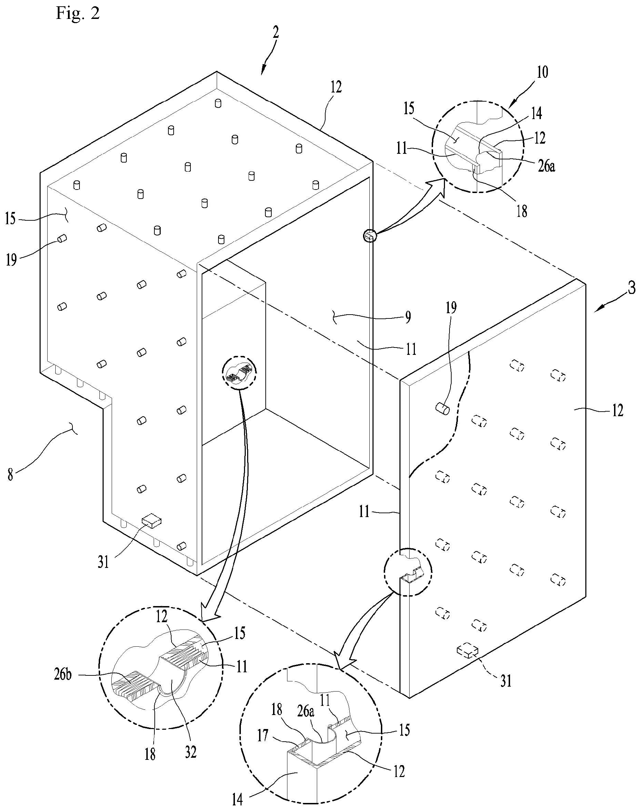

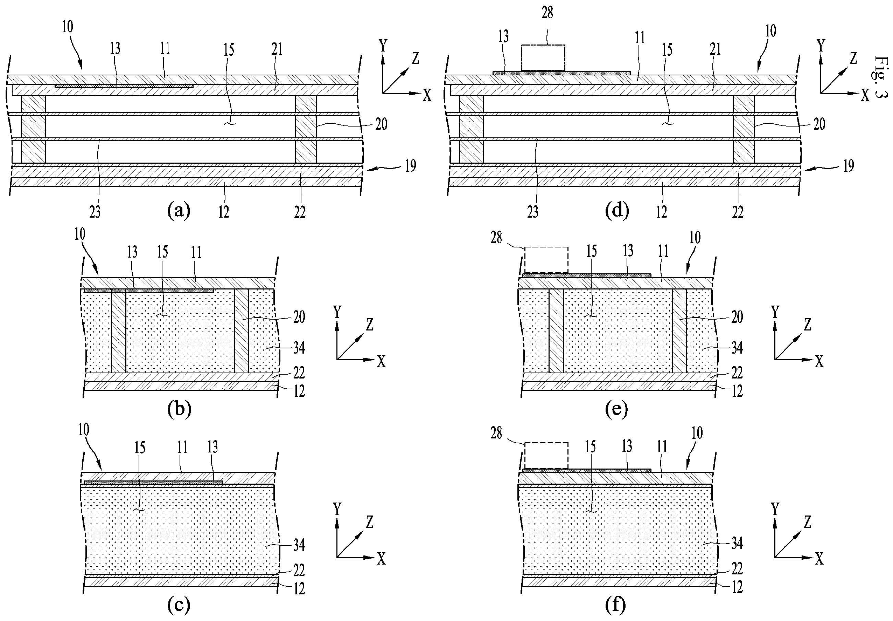

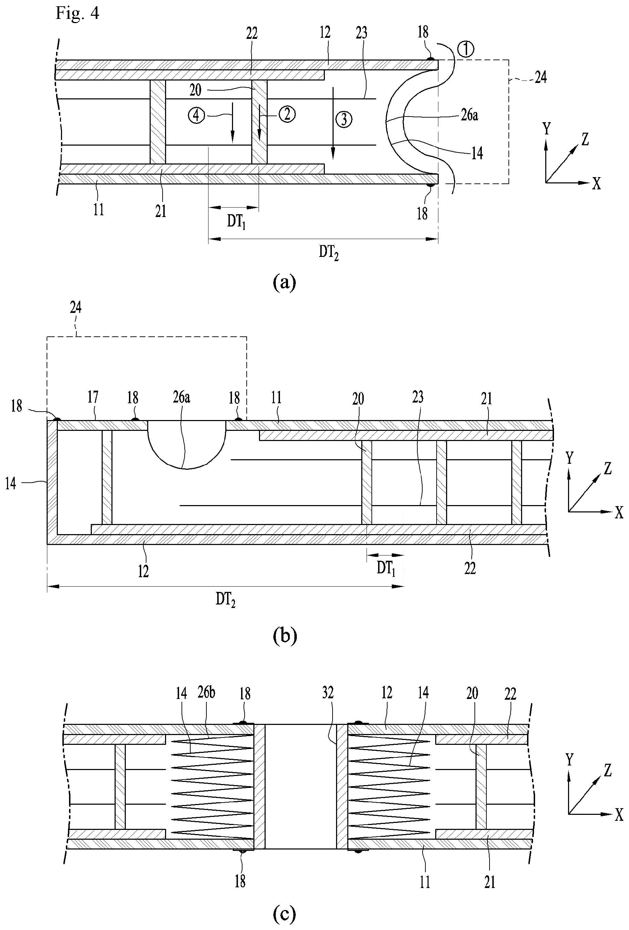

Referring to FIGS. 1 to 4, a heat insulator 10 of the present disclosure may include plates 11, 12, and 14. In the present disclosure, the term "plate" may mean at least one of the first and second plates 11 and 12 and the side plate 14. Optionally, the heat insulator of the present disclosure may include a vacuum space portion 15. The vacuum space portion 15 may be formed by walls provided by the plates 11, 12, and 14. The vacuum space portion 15 may have a thickness in a first direction. The plates 11, 12, and 14 may include a first plate 11 and a second plate 12. The first plate 11 may include a portion extending in a direction different from the first direction. The second plate 12 may include a portion extending in a first direction different from the first direction. Optionally, the plate may include a side plate 14 including a portion extending in the first direction. For example, the heat insulator 10 of the present disclosure may be provided such that the first and second plates 11 and 12 and the side plate 14 are each provided as separate components, and the separated components are connected to each other. As another example, the heat insulator 10 of the present disclosure may be provided such that at least two components among the first and second plates 11 and 12 and the side plate 14 are provided as an integral part, and the separated components are connected to each other. As yet another example, the heat insulator 10 of the present disclosure may be provided such that the portions connecting the first and second plates 11 and 12 and the side plate 14 to each other are each provided as an integral part. In this case, the first plate 11 may be provided as a separate component, and the separated components may be provided to be connected to each other. Alternatively, the second plates 12 may be provided as separate components, and the separated components may be provided to be connected to each other. Alternatively, the side plates 14 may be provided as separate components, and the separated components may be provided to be connected to each other. Optionally, the heat insulator 10 of the present disclosure may include a third plate that is arranged on at least a portion of the heat insulator 10 or connected to at least a portion of the plates 11, 12, and 14. The third plate may include a portion that is thinner or has the same thickness as the plates 11, 12, and 14. The third plate may include a portion that is thicker than the plates 11, 12, and 14. The third plate may be arranged in the vacuum space portion 15 or may be arranged outside the vacuum space portion 15. Examples of the third plate may include the thermal insulators 23, 26a, 26b, and 34 and the deformation resistor 13 described in the present disclosure.

Optionally, the heat insulator 10 of the present disclosure may include thermal insulators 23, 26a, 26b, and 34 for reducing the amount of heat transfer between a first space provided near the first plate 11 and a second space provided near the second plate 12, or for reducing the amount of heat transfer between the first plate 11 and the second plate 12. A thermal insulator that reduces the amount of heat transfer by conduction may be defined as a conduction resistance sheets 26a and 26b, and a thermal insulator that reduces the amount of heat transfer by radiation may be defined as a radiation resistance sheet 23. The thermal insulators 23, 26a, 26b, and 34 may be provided as a porous material 34 or as a filler 34. The filler whose interior is filled with a porous material can be defined as the porous material 34. The thermal insulators 23, 26a, 26b, and 34 may include at least one of the radiation resistance sheet 23, the porous material 34, the filler 34, and the conduction resistance sheets 26a and 26b, or a mixture of at least two of them. The thermal insulators 23, 26a, 26b, and 34 may be connected to at least a portion of the plates 11, 12, and 14 or may be provided so as not to come into contact with the plates 11, 12, and 14. A shield 24 may be provided on the outside of the thermal insulators 23, 26a, 26b, and 34 to provide insulation. A connecting frame 17 may be provided on the outside of the thermal insulators 23, 26a, 26b, and 34. The heat insulator 10 may include a conduit passing through the vacuum space portion 15. The conduit may be formed by providing a pipe wall 32 as a separate component, or may be provided in a form in which the pipe wall 32 is deleted and only a through hole is formed in the plate. The side plate 14 may be provided near the conduit, or the thermal insulators 23, 26a, 26b, and 34 may be provided.

Optionally, the heat insulator 10 of the present disclosure may include a deformation resistor 13 connected to at least some of the plates 11, 12, and 14 to increase the degree to deformation resistance of the plates 11, 12, and 14. When the deformation resistor is provided in the form of a plate, the deformation resistor may be referred to as a deformation resistance plate.

Optionally, the heat insulator 10 of the present disclosure may include a support 19 connected to at least some of the plates 11, 12, and 13 and maintaining the vacuum space portion 15. The support 19 may include a bar 20 having a portion extending in a first direction, which is a thickness direction of the vacuum space portion 15. The support 19 may include a support plate 22 having a portion extending in a direction different from the first direction. The support 19 may include a plurality of bars 20 and a connecting plate 21 connecting the plurality of bars 20. The support 19 may include at least one of the bar 20, the connecting plate 21, and the support plate 22, or a mixture of at least two of them.

Optionally, the heat insulator 10 of the present disclosure may include a component coupling portion that provides a portion where the components 24, 28, and 32 are arranged or supported. For example, when the component coupling portion is provided in the form of a plate, the component coupling portion may be referred to as a component coupling portion plate. The component connected to the component coupling portion may include a through component that is arranged to pass through at least a portion of the heat insulator 10 or at least some of the plates 11, 12, and 14. The component connected to the component coupling portion may include a surface component that is arranged to be connected to the surface of the heat insulator 10 or to be connected to the surfaces of the plates 11, 12, and 14. The through component may be a component that forms a path through which a fluid (electricity, refrigerant, water, air, or the like) passes. The through component may be provided in the form of a tube. The tube may include a straight tube and/or a curved tube. The tube may be provided in a plurality of tubes or may extend in one direction. The through component may include at least one of the tube, the first outlet portion, and the second outlet portion. In the present disclosure, the fluid is defined as all types of flowing objects. The fluid includes moving solids, liquids, gases, and electricity. The through component may be a component that forms a path through which a refrigerant for heat exchange passes, such as a Suction Line Heat Exchanger (SLHX) or a refrigerant pipe. The SLHX may be understood as a suction line heat exchanger that causes heat exchange between the refrigerant that has passed through the evaporator and the refrigerant before being introduced into the evaporator. The through component may be a wire that supplies electricity to the apparatus. The through component may be a component that forms a path through which air can pass, such as a duct or port through which a fluid flows along the surface of the through component. The port may include an exhaust port that provides a path through which air is exhausted from a space formed between the first plate 11 and the second plate 12 to form the vacuum space portion 15. The through component may be paths through which fluids such as coolant, hot water, ice, and defrost water may pass. Examples of the surface component may include a peripheral insulating material, a side panel, an injected foam, a pre-prepared resin, a hinge, a latch, a basket, a drawer, a shelve, lighting, a sensor, an evaporator 7, a front decoration, a hot line, a heater, an exterior cover, and an interior cover.

Through FIGS. 1 to 4, terms such as the plate, the first plate, the second plate, the side plate, the third plate, the vacuum space portion, the thermal insulator, the conduction resistance sheet, the radiation resistance sheet, the porous material, the filler, the component coupling portion, the joint, the support, the bar, the support plate, the connecting plate, the deformation resistor, the deformation resistance plate, the component coupling portion, the component coupling portion plate, the through component, the surface component, the duct, the port, or the like are defined. In the present disclosure, when the above terms are used in parts other than the parts described with respect to FIGS. 1 to 4, the terms used should be interpreted as defined in FIGS. 1 to 4.

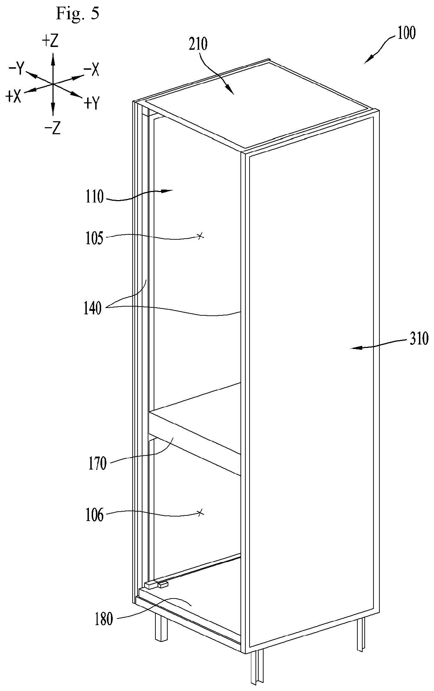

In the present disclosure, that object A is connected to object B may be defined to mean that at least a portion of the object A and at least a portion of the object B are directly connected, or that at least a portion of the object A and at least a portion of the object B are connected via an intermedium between the objects A and B. In a modification example, the object A being connected to the object B may include a case in which the object A and the object B are prepared as a single body in a shape in which they are connected in the above-described manner. In the present disclosure, examples of connection can be support, combine, and seal, which will be described later. In the present disclosure, the phrase "object A is supported by the object B" may be defined to mean that the object A is restricted from moving in one or more of +X, -X, +Y, -Y, +Z, and -Z axis directions by the object B. In the present disclosure, examples of support may be coupling and sealing, which will be described later. In the present disclosure, the phrase "object A is combined with the object B" may be defined to mean that the object A is restricted from moving in one or more of the X, Y, and Z-axis directions by the object B. In the present disclosure, an embodiment of the combination may be a sealing, which will be described later. In the present disclosure, the phrase "object A is sealed with the object B" may be defined to mean that movement of fluid is not permitted at a portion where the object A and object B are connected. In the present disclosure, at least one object, that is, at least a portion of the object A and the object B, may be defined as including a portion of the object A, the entirety of the object A, a portion of the object B, the entirety of the object B, a portion of the object A and a portion of the object B, a portion of the object A and the entirety of the object B, the entirety of the object A and a portion of the object B, and the entirety of the object A and the entirety of the object B. In the present disclosure, the phrase "plate A may be a wall defining space A" may be defined to mean that at least a portion of the plate A may be a wall forming at least a portion of the space A. That is, at least a portion of the plate A may be the wall forming the space A, or the plate A may be the wall forming at least a portion of the space A. In the present disclosure, the central portion of an object may be defined as a portion positioned at the center among three portions obtained by dividing the object into three equal parts along a longitudinal direction of the object. The periphery of an object may be defined as a portion positioned on one side or the other of a central portion among three portions obtained by dividing the object into three equal parts. The periphery of an object may include a surface in contact with the central portion and a surface opposite thereto. The opposite surface may be defined as the border or edge of the object. In the present disclosure, a degree to deformation resistance indicates the degree to which an object resists deformation, and may be defined as a value determined by the shape including the thickness of the object, the material of the object, and the processing method of the object. In the present disclosure, a degree of heat transfer resistance indicates the degree to which an object resists heat transfer, and may be defined as a value determined by the shape including the thickness of the object, the material of the object, and the processing method of the object. In the present disclosure, a degree of heat transfer resistance may be defined as at least one of a degree of conduction resistance, a degree of radiation resistance, and the degree of convection resistance or a sum of at least two or more thereof. The terms "upper side", "lower side", "right side", "left side", "front side", and "rear side" used in the following description will be understood through the coordinate system illustrated in FIGS. 1 and 5. An example of the "+Z" means the "upper side", an example of the "-Z" means the "lower side", an example of the "+Y" means the "right side", an example of the "-Y" means the "left side", an example of the "+X" means the "front side", and an example of the "-X" means the "rear side". A front-rear direction used in the present specification may be an example of the X-axis direction, a left-right direction may be an example of the Y-axis direction, and an up-down direction may be an example of the Z-axis direction.

The heat insulator 10 of the present disclosure may be applied to a refrigerator 1. The refrigerator 1 may include a main body 2 provided with a cavity 9 capable of storing stored items, and a door 3 provided to open and close the main body 2. A cold source for supplying cold air (cold) to the cavity 9 may be provided. For example, the cold source may be an evaporator 7 that evaporates a refrigerant to remove heat. The refrigerator may include a compressor 4 that compresses the refrigerant. The refrigerator may include a condenser 5 that condenses the compressed refrigerant. The condenser 5 may be connected to an expander 6 that expands the condensed refrigerant.

The heat insulators 110, 210, 310, and 410 of the present disclosure include a connecting member 140 and a block 150.

The connecting member 140 includes a plurality of members that are connected so as to be arranged in at least two directions intersecting each other. The connecting member 140 has at least one connecting area 141.

The connecting area 141 may be understood as an area where the heat insulator 110 described later is arranged. For example, the connecting area 141 may be provided on each surface of the connection member 140. The connecting area 141 may be understood as an area where the heat insulator 10 described later is coupled or joined. In this case, the connecting area 141 may be a coupling or joining area. The connection member 140 may be understood as a coupling member.

The member forming the connecting member 140 may be, for example, a frame. That is, the connecting member 140 may be a structure connected by a plurality of frames. However, the present disclosure is not necessarily limited thereto.

The heat insulator 110 includes a first plate 111, a second plate 112, and a vacuum space portion 115 provided between the first plate 111 and the second plate 112. The heat insulator 110 is installed in the connecting area 141.

The heat insulator 10 may be defined as being supported by, coupled or joined to the connecting area 141.

Optionally, the connecting member 140 and the block 150 may be provided on one side of at least two heat insulators 110 arranged in directions intersecting each other.

Referring to FIGS. 5, 6, and 10, an example is illustrated in which a first heat insulator 110 is installed in the +y direction, a second heat insulator 210 is installed in the +z direction, a third heat insulator 310 is installed in the -y direction, and a fourth heat insulator 410 is installed in the -x direction, on the connecting member 140. The connecting member 140 may have connecting areas 141 in the +y direction, the +z direction, the -y direction, and the -x direction.

The present disclosure secures rigidity by connecting at least one heat insulator 110 to the connecting member 140 forming a basic skeleton. By having a structure in which the heat insulator 110 is installed in the connecting area 141 of the connecting member 140, deformation such as warping or sagging of the heat insulator 110 can be minimized.

At least one side of the connecting area 141 is provided with the block 150. The block 150 may be arranged on one side of the heat insulator 110. For example, the block 150 may be arranged on an inner corner of the heat insulator 110. As a result, one side of the heat insulator 110, for example, the inner corner, enables insulation.

By arranging the block 150 at the inner corner of the heat insulator 10, heat bridge at the inner corner of the heat insulator 10 can be reduced, thereby improving insulation performance.

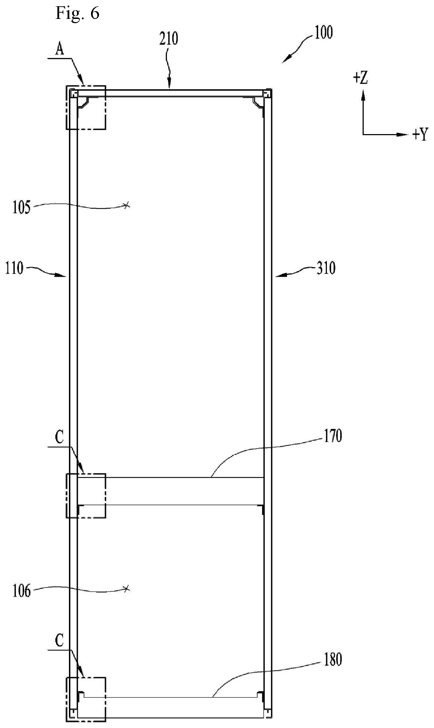

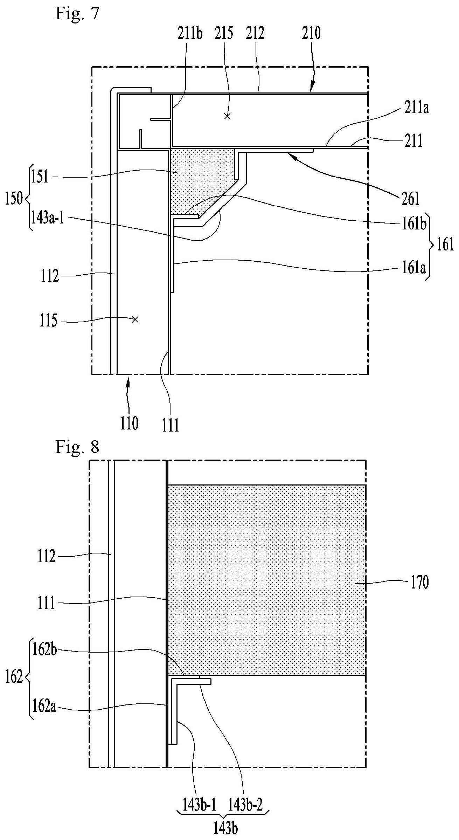

Referring to FIGS. 6 and 7, blocks 150 are installed at the corners on one side and the other side of the heat insulator 110 in the +z direction.

The block 150 may include a non-vacuum insulating portion 151 and/or an insulating cover 143a-1.

The non-vacuum insulating portion 151 may be connected to the inner corner of the heat insulator 10. The non-vacuum insulating portion 151 reduces heat bridges at the inner corner of the heat insulator 10, thereby improving insulation performance.

The insulating cover 143a-1 may shield the non-vacuum insulating portion 151. The insulating cover 143a-1 may be supported by one surface of the heat insulator 110.

Optionally, the insulating covers 143a-1 may be supported by one surface of each of the insulating members 110 adjacent to each other. For example, the insulating covers 143a-1 may be supported by one surface of each of the heat insulators 110 with both side portions adjacent to each other. The insulating covers 143a-1 may be arranged on one side of the non-vacuum insulating member 151. For example, the insulating covers 143a-1 may be arranged inside the non-vacuum insulating portion 151.

The non-vacuum insulating portion 151 is shielded by the insulating cover 143a-1 to be protected from impact or moisture, or the like.

The insulating cover 143a-1 may be formed so that at least one portion thereof is bent. This allows the insulating cover 143a-1 to more stably support one surface of the heat insulator 110 and/or the non-vacuum insulating portion 151.

As illustrated in FIG. 7, an example of the insulating cover 143a-1 is illustrated in which both side portions are supported by the inner surface of the first heat insulator 110 and the inner surface of the second heat insulator 210, respectively. An example of the insulating cover 143a-1 is illustrated as having a two-folded shape.

Optionally, the heat insulator 10 of the present disclosure may include a reinforcement portion 161.

The reinforcement portion 161 may be coupled to one surface of the heat insulator 110. For example, the reinforcement portion 161 may be coupled to the inner surface of the first plate 111. At least one side of the reinforcement portion 161 may be bent and supported by one side of the insulating cover 143a-1. For example, the reinforcement portion 161 may be able to face one side of the insulating cover 143a-1.

The reinforcement portion 161 may be supported so as to face both side portions of the insulating cover 143a-1. For example, at least two reinforcement portions 161 may be provided. The two reinforcement portions 161 may be supported so as to face both side portions of the insulating cover 143a-1, respectively.

The reinforcement portion 161 may be arranged on one side of the non-vacuum insulating portion 151. The reinforcement portion 161 may have a portion extending away from the non-vacuum insulating portion 151, thereby minimizing leakage of cold air.

By means of the structure in which the reinforcement portion 161 is coupled to one surface of the heat insulator 110 and supports one side of the insulating cover 143a-1, the strength can be reinforced between the heat insulator 110 and the insulating cover 143a-1. Since the reinforcement portion 161 secures a sufficient distance to be in contact with the heat insulator 110, the stress can be distributed between the reinforcement portion 161 and the heat insulator 110. Since the reinforcement portion 161 secures a sufficient distance for surface-to-surface contact with the insulating cover 143a-1, the stress can be distributed between the reinforcement portion 161 and the insulating cover 143a-1.

The reinforcement portion 161 extends by a predetermined distance from one surface of the heat insulator 110 to sufficiently block leakage of cold air.

FIG. 7 illustrates an example in which the first reinforcement portion 161 is coupled to the inner surface of the first heat insulator 110 and is supported so as to face one side of the insulating cover 143a-1. Moreover, FIG. 7 illustrates an example in which the second reinforcement portion 161 is coupled to the inner surface of the second heat insulator 210 and is supported so as to face the other side of the insulating cover 143a-1.

The portion where the reinforcement portion 161 is connected to the inner surface of the heat insulator 110 may be a reinforcing coupling portion 161a. The portion where the reinforcement portion 161 is supported so as to face one side or the other side of the insulating cover 143a-1 may be a reinforcing support portion 161b.

The reinforcing support portion may have a portion supported between the non-vacuum insulating portion 151 and the insulating cover 143a-1.

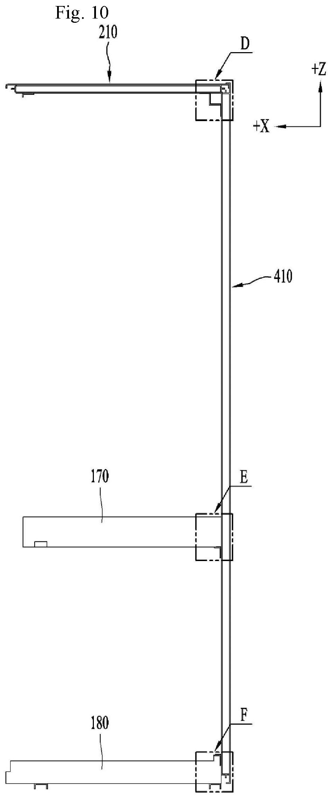

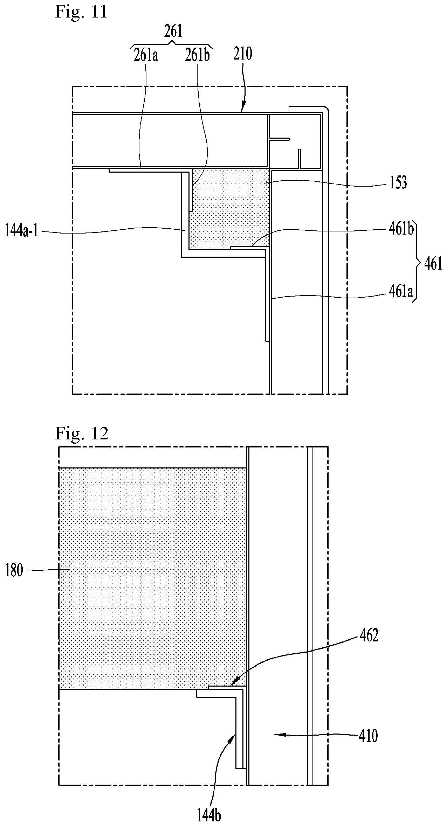

Referring to FIGS. 10 and 11, another example of the block 150 is illustrated. The block 150 in FIG. 11 differs from the block 150 in FIG. 7 in the cross-sectional shapes of the non-vacuum insulating portion 151 and the insulating cover 143a-1. In FIG. 11, the non-vacuum insulating portion 151 may have a rectangular cross-section. An example in which the insulating cover 143a-1 is bent once and has an L-shape is illustrated.

Optionally, in the present disclosure, at least two heat insulators 110 and 210 arranged in directions intersecting each other may be provided. The heat insulators 110 and 210 may be connected so that parts of the side ends overlap each other.

Two adjacent heat insulators 110 and 210 may be provided so that the vacuum space portion 115 and 215 overlaps or does not overlap in at least one of the thickness direction and the length direction of the vacuum space portion 115 and 215.

The non-vacuum insulating portion 151 may be arranged to insulate the inner corners of adjacent heat insulators 110. The inner corners of adjacent heat insulators 110 may refer to the side portions of the heat insulators 110 arranged in the directions intersecting each other.

Optionally, the main body of the refrigerator may be formed to include a portion having at least two heat insulators 110. Near the corners where the heat insulators 110 are adjacent to each other, a plurality of plates are concentrated, such as the first plate 111 of the heat insulator 110, the plates at the side ends of the heat insulator 110, and the coupling portion where two heat insulators 110 are coupled to each other. The heat transfer path formed along the plurality of plates is also concentrated near the corners. Therefore, the insulation performance may be weak near the corners where the heat insulators 110 are adjacent to each other.

By placing the non-vacuum insulating portion 151 at the inner corner of the heat insulators 110 adjacent to each other, the insulation performance can be improved.

More specifically, as the cold air inside the chamber flows along the first plate 111 and is lost through a coupling portion where the side end plate and two heat insulators 110 are coupled to each other, the non-vacuum insulating portion 151 is able to block the loss of the cold air.

Optionally, the insulating cover 143a-1 may be provided on one side of the connecting member 140. The insulating cover 143a-1 may be formed integrally with the connecting member 140 or may be implemented in a form coupled as a separate member. For example, the insulating cover 143a-1 may be provided on at least one of the first to third members 143a, 143b, 143c, 144a, 144b, 144c, and 145 of the connecting member 140.

Optionally, the heat insulator 10 of the present disclosure may further include a reinforcing plate 160.

The reinforcing plate 160 may be connected to one surface of the first plate 111. Optionally, the aforementioned reinforcement portion 161 may be provided on the reinforcing plate 160.

The reinforcement portion 161 may be formed along the edge of the reinforcing plate 160.

Hereinafter, with reference to FIG. 8, an example in which a component 170 is supported by a component support portion 143b is described.

The reinforcement portion 161 may support the component 170 provided on one surface of the first plate 111. The component 170 may be provided to be supported by, for example, at least two heat insulators 110.

The connecting member 140 may include a component support portion 143b. The component support portion 143b may support the component 170 on one side of the component 170.

As illustrated in FIG. 8, the component support portion 143b may be supported by the first heat insulator 110 by having a portion that is arranged parallel to the first plate 111 of the first heat insulator 110. The component support portion 143b may have a portion that extends in a direction intersecting the first plate 111 of the first heat insulator 110 and/or a portion that supports the component 170. In FIG. 8, an example in which the component support portion 143b supports the component 170 in the +z direction is illustrated.

Optionally, the heat insulator 110 of the present disclosure may include the reinforcement portion 161. The reinforcement portion 161 may be arranged between the component support portion 143b and the component 170 to enhance strength. The reinforcement portion 161 may be formed in a form in which one side is bent.

For example, the reinforcement portion 161 may include a reinforcing coupling portion 161a and a reinforcing support portion 161b.

The reinforcing coupling portion 161a may be coupled to the first plate 111. The reinforcing coupling portion 161a may be arranged between the first plate 111 and the component support portion 143b. The reinforcing support portion 161b is arranged on one side of the component 170 to reinforce strength. The reinforcing support portion 161b may support the component 170 in the +z direction. The reinforcing support portion 161b may be arranged between the component support portion 143b and the component 170.

Referring to FIG. 12, the component support portion 143b supporting the component 170 viewed from another direction is illustrated. The embodiment of FIG. 12 is not different from the embodiment of FIG. 8 in terms of configuration except that the fourth insulator 410 is provided with the component support portion 143b and the reinforcement portion 161, and therefore a detailed description thereof will be omitted.

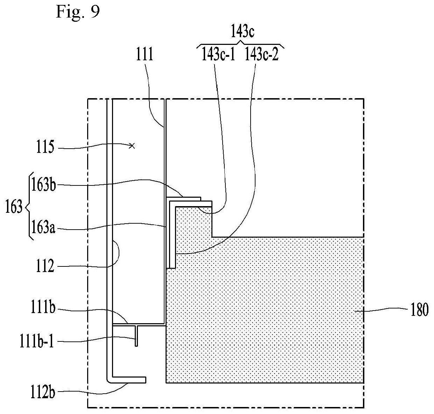

FIG. 9 illustrates another example in which a component 180 is supported by the component support portion 143b.

As illustrated in FIG. 9, a component support portion 143c supports the component 180 in the -z direction, and is different from the component support portion 143b of FIG. 8 in the direction in which the component 170 is supported.

The component support portion 143c may be connected to one side of the component 180. The component support portion 143b may be arranged between the component 180 and the reinforcement portion 161.

The component support portion 143c of FIG. 9 may be arranged on one side of the component 180 and may support the component 170. Since the component support portion 143c has the same shape as the example described in FIG. 8, a description thereof will be omitted.

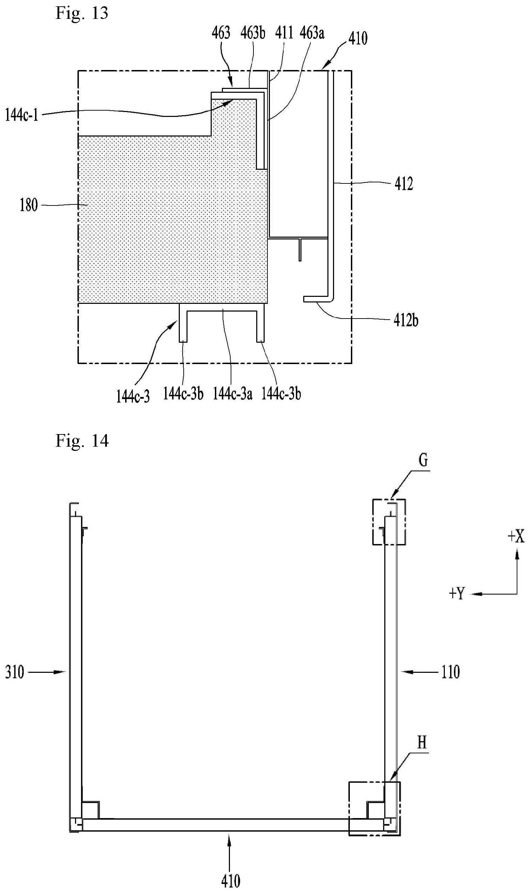

FIG. 13 differs from FIG. 9 in that two component support portions 144c-1 and 144c-3 support the component 180 in the -z direction and the +z direction, respectively.

The component support portion 144c-1 may be formed in a shape in which at least one side is bent.

For example, the component support portion 144c-1 may have one side bent. A structure in which one side of the component support portion 144c-1 is bent may form a structure that is easy to be arranged between the heat insulator 110 and the component 180.

As another example, both sides of the component support portion 144c-3 may be bent. The structure in which both sides of the component support portion 144c-3 are bent can distribute stress by transmitting the stress from the component 180 in both directions. This allows the component 180 to be supported with a more stable structure.

The connecting member 140 may be implemented in a form in which a plurality of members extending in three directions intersecting each other are connected. At least one heat insulator 110 may be connected to the connecting member 140. The connecting member 140 is preferably formed of a material having sufficient rigidity to withstand the weight of the heat insulator 110. The connecting member 140 enables the strength of the heat insulator 110 to be maintained. The connecting member 140 enables the components 170 and 180 to be supported or coupled.

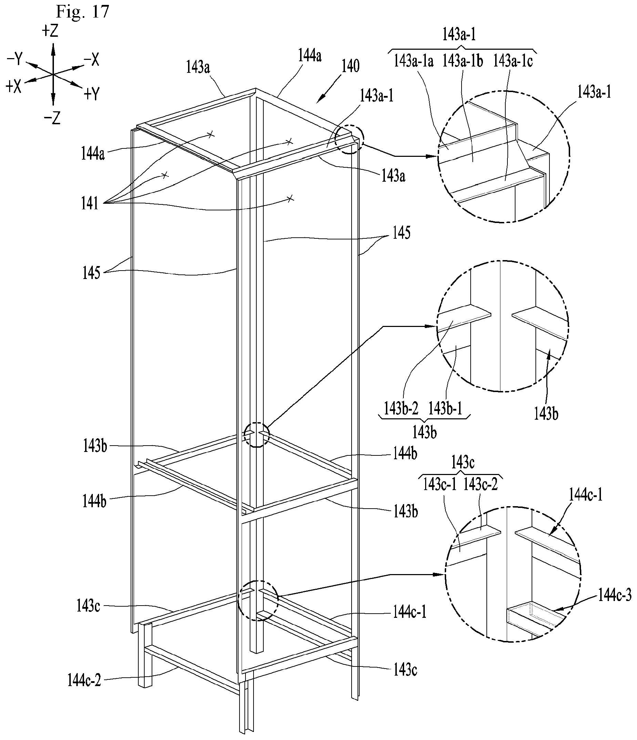

Hereinafter, the structure of the connecting member 140 will be described with reference to FIGS. 17 to 19.

The connecting member 140 may include first members 143a, 143b, and 143c, second members 144a, 144b, and 144c, and/or a third member 145.

The connecting area 141 may be formed by the connection of at least two of the first members 143a, 143b, and 143c, the second members 144a, 144b, and 144c and the third member 145.

The first members 143a, 143b, and 143c may extend in the first direction. For example, the first members 143a, 143b, and 143c may be provided in a plurality of members. The first members 143a, 143b, and 143c may be a set of members arranged in the +x direction in FIG. 17. The first members 143a, 143b, and 143c may support at least a portion of the heat insulator 110 and the component 170.

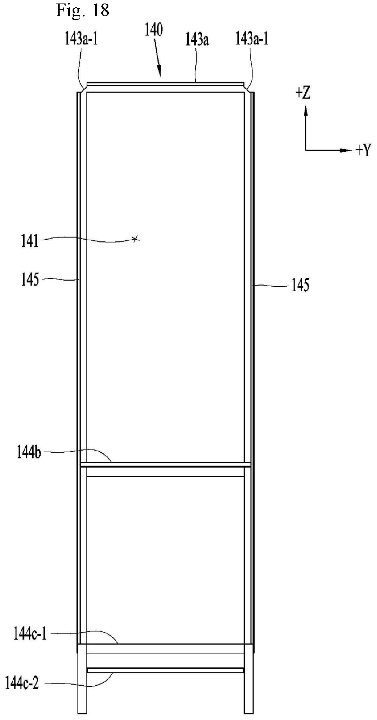

The first members 143a, 143b, and 143c may be provided with the insulating cover 143a-1. In FIGS. 17 and 18, an example is illustrated in which the first members 143a, 143b, and 143c arranged on one side in the +z direction include the insulating cover 143a-1. The insulating cover 143a-1 may be formed such that a cross-section of a partially bent shape extends in the +x direction. An example is illustrated in which two insulating covers 143a-1 provided in the first members 143a, 143b, and 143c are provided spaced apart in the +y direction.

The first members 143a, 143b, and 143c may have at least one component support portion 143b. In FIGS. 17 and 18, an example is illustrated in which the component support portion 143b is provided on the first members 143a, 143b, and 143c so as to be arranged on one side in the -z direction. The component support portion 143b may be formed such that a cross-section bent in the shape of the letter L extends in the +x direction. The component support portions 143b may be arranged so as to be spaced apart in the +y direction. The component support portions 143b may be arranged so as to be spaced apart in the +z direction.

The second members 144a, 144b, and 144c may extend in a second direction intersecting the first direction. In FIG. 17, the second members 144a, 144b, and 144c may be a set of members extending in the +y direction. The second members 144a, 144b, and 144c may be coupled to the first members 143a, 143b, and 143c. The second members 144a, 144b, and 144c may be provided in a plurality of members. The second members 144a, 144b, and 144c may support at least a portion of the heat insulator 110 and the component 170. The second members 144a, 144b, and 144c can be connected to the third member 145 to form the connecting area 141.

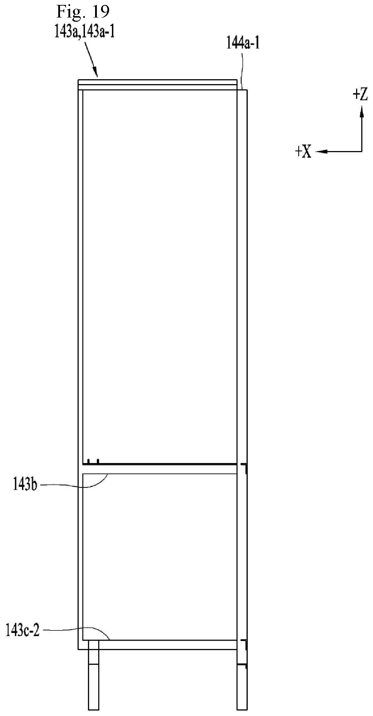

Optionally, referring to FIGS. 17 and 19, an example is illustrated in which the insulating cover 143a-1 is provided on the second members 144a, 144b, and 144c arranged on one side in the +z direction. The insulating cover 143a-1 may be formed such that a cross-section of a shape bent once extends in the +y direction. The insulating cover 143a-1 may have an L-shaped cross-section. Two insulating covers 143a-1 provided in the second members 144a, 144b, and 144c may be provided spaced apart from each other in the +x direction.

The second members 144a, 144b, and 144c may include at least one component support portion 143b. In FIGS. 17 and 18, an example is illustrated in which the component support portion 143b is provided on the first members 143a, 143b, and 143c so as to be arranged on one side in the -z direction. The component support portion 143b may be formed such that a cross-section bent in the shape of the letter L extends in the +x direction. The component support portions 143b may be arranged so as to be spaced apart in the +y direction. The component support portions 143b may be arranged so as to be spaced apart in the +z direction.

The third member 145 may extend in a third direction intersecting the first direction and/or the second direction. In FIGS. 17 to 19, the third member 145 may be a set of members extending in the +z direction. The third member 145 may be coupled to at least one of the first members 143a, 143b, and 143c and the second members 144a, 144b, and 144c. The third member 145 may include at least one of the insulating cover 143a-1 and a component support portion 143b.

At least one of the first to third members 143a, 143b, 143c, 144a, 144b, 144c, and 145 may have a portion that is bent on at least one side so as to support a part of the component 170 provided on the first plate 111. Optionally, at least one of the first to third members 143a, 143b, 143c, 144a, 144b, 144c, and 145 may be bent on one side or on both side portions.

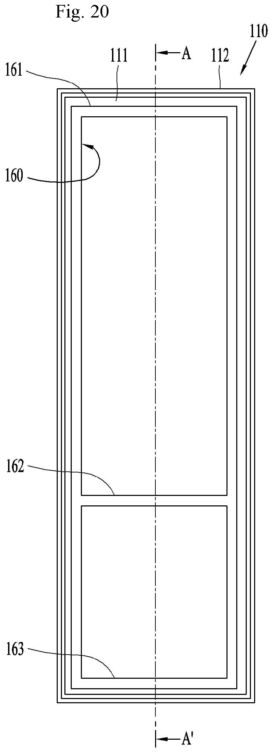

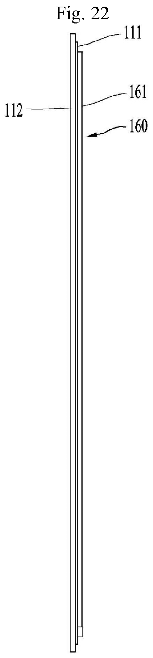

Referring to FIGS. 20 to 23, the configuration of the reinforcing plate 160 provided in the heat insulator 110 of the present disclosure will be described.

The reinforcing plate 160 may be provided in the heat insulator 110. For example, the reinforcing plate 160 may be provided on the inner surface of the first plate 111.

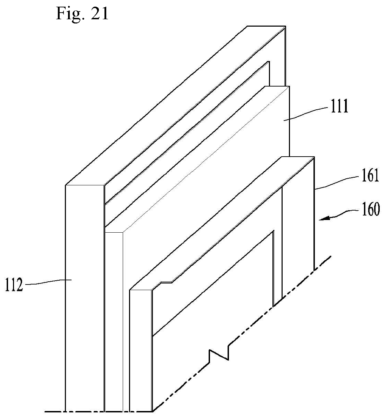

The reinforcing plate 160 may be provided with a reinforcement portion 161. Referring to FIGS. 20 and 21, the reinforcement portion 161 may be provided on at least a portion of the edge of the reinforcing plate 160.

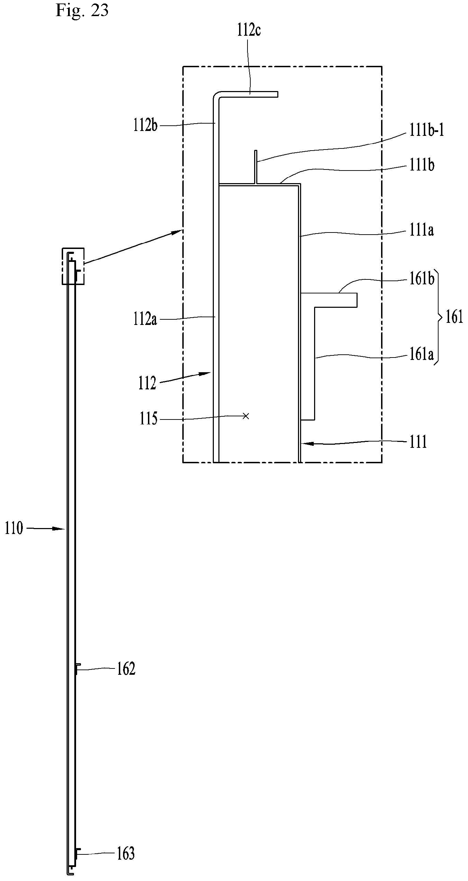

Referring to FIGS. 20 and 23, the reinforcement portions 161 may be arranged parallel to each other on the reinforcing plate 160. The detailed configuration of the reinforcement portions 161 will be replaced with the previous description.

The heat insulator 110 described above is not limited to the configuration and method of the embodiments described above, and the embodiments may be configured by selectively combining all or part of each embodiment so that various modifications can be made.

It will be apparent to those skilled in the art that the present disclosure may be embodied in other specific forms without departing from the spirit and essential characteristics thereof. Therefore, the above detailed description should not be construed in any way as limiting but rather as illustrative. The scope of the present disclosure should be determined by a reasonable interpretation of the appended claims, and all modifications within the scope of equivalents of the present disclosure are intended to be included within the scope of the present disclosure.

## Claims

1. A heat insulator comprising:
a first plate;
a second plate;
a vacuum space portion provided between the first plate and the second plate; and
a connecting member having at least one connecting area that enables the heat insulator to be connected.

2. The heat insulator of claim 15, wherein the block includes
a non-vacuum insulating portion in contact with one side of the heat insulator, and
an insulating cover supported by an inner surface of the heat insulator to shield the non-vacuum insulating portion.

3. The heat insulator of claim 2, wherein at least two heat insulators arranged in directions intersecting each other are provided, and
the non-vacuum insulating portion is arranged to insulate one side of heat insulators adjacent to each other.

4. The heat insulator of claim 2, wherein at least two heat insulators arranged in directions intersecting each other are provided, and
the insulating cover is supported by one surface of each of the heat insulators adjacent to each other.

5. The heat insulator of claim 4, wherein both side portions of the insulating cover are supported by one surface of each of the heat insulators adjacent to each other.

6. The heat insulator of claim 2, further comprising a reinforcement portion that is coupled to an inner surface of the first plate and has at least one side protruding and supported by one side of the insulating cover.

7. The heat insulator of claim 6, wherein the reinforcement portion is supported so as to face both side portions of the insulating cover.

8. The heat insulator of claim 2, wherein at least one portion of the insulating cover is formed to be bent.

9. The heat insulator of claim 2, further comprising a reinforcing plate connected to one surface of the first plate and having a reinforcement portion that is bent at least on one side and supported by one side of the insulating cover.

10. The heat insulator of claim 9, wherein the reinforcement portion is provided in at least a portion of an edge of the reinforcing plate.

11. The heat insulator of claim 9, wherein the reinforcement portion supports one side of a component provided on one surface of the first plate.

12. The heat insulator of claim 1, wherein the connecting member is implemented in the form in a plurality of members extending in three directions intersecting each other are connected.

13. The heat insulator of claim 15, wherein the connecting member includes
a first member extending in a first direction,
a second member extending in a second direction intersecting the first direction and coupled to the first member, and
a third member extending in a third direction intersecting the first direction and the second direction and coupled to at least one of the first and second members.

14. The heat insulator of claim 13, wherein at least one of the first to third members includes a portion that is bent on at least one side to support a portion of a component provided on the first plate.

15. The heat insulator of claim 1, further comprising a block provided on at least one side of the connecting area,
wherein the connecting member includes a plurality of members connected to be arranged in at least two directions intersecting each other.
